# EUROPÄISCHE PATENTANMELDUNG

(11) **EP 4 640 396 A2**
(43) Veröffentlichungstag der Anmeldung: **29.10.2025**
(21) Anmeldenummer: 25172547.9
(22) Anmeldetag: 25.04.2025
(51) Int. Cl.: B29C 37/00, B29C 67/00, C08J 7/02, B29K 105/04

(54) **VERFAHREN ZUR BEARBEITUNG EINES KUNSTSTOFFTEILS**

(30) Priorität: 25.04.2024 AT 503482024
(71) Anmelder: TECHNISCHE UNIVERSITÄT WIEN, 1040 Wien (AT)
(72) Erfinder: Susic, Ivana, 1160 Wien (AT); Baseta, Efstathia Eleni, 1040 Wien (AT); Schmidt, Dominik, 1040 Wien (AT)
(74) Vertreter: Babeluk Patentanwälte GmbH

(57) **Zusammenfassung**

Die Erfindung betrifft ein Verfahren zur Bearbeitung eines Kunststoffteils (6), wobei das Verfahren die folgenden Schritte umfasst:
a. Bereitstellen einer flüssigen Mischung, umfassend zumindest ein organisches Lösungsmittel, welches in zumindest einer, gegenüber dem Kunststoff im Wesentlichen inerten, Basisflüssigkeit, vorzugsweise Wasser, verdünnt ist;
b. In Kontakt bringen des Kunststoffteils (6) mit der Mischung an zumindest einer Oberfläche;
c. Einwirken lassen der Mischung auf den Kunststoffteil (6) über eine vorgegebene Einwirkzeit;
d. Formen zumindest der Oberfläche des Kunststoffteils (6) durch Aufbringen von Kräften auf die Oberfläche.

## Beschreibung

Sie betrifft auch ein Kunststoffteil, zumindest teilweise bestehend aus zumindest einem Kunststoff.

Kunststoffteile werden in verschiedensten Bereichen der Technik verwendet, wobei sie die unterschiedlichsten Aufgaben erfüllen. Beispielsweise werden sie unter anderem als Gussformen für Gusswerkstoffe, im Prototyping, oder der Medizintechnik verwendet. Dabei haben sie gemein, dass sie in der Regel nach der primären Herstellung und damit einhergehenden Formung zu einem späteren Zeitpunkt nicht mehr einfach in eine andere Form gebracht werden können. Dazu muss der Kunststoff beispielsweise teilweise abgetragen werden, etwa geschliffen oder durch CNC-Maschinen gefräst werden. Insbesondere bei komplex oder ausladend geformten Endkonturen muss so ein sehr großes Kunststoffstück verwendet werden, von dem der Großteil des Materials abgetragen wird, um die gewünschte Form zu erreichen. Dies ist aufwändig, führt zu einem hohen Materialverbrauch und benötigt kostenintensive Werkzeuge. Alternativ muss der Kunststoff erhitzt werden, was nachteilig für die innere Struktur des Kunststoffes sein kann, etwa wenn er geschäumt wurde. Solche Verfahren sind darüber hinaus energie- und kostenintensiv.

Aufgabe der Erfindung ist damit, ein Verfahren zur Bearbeitung eines Kunststoffteils und einem Kunststoffteil bereitzustellen, das oder der eine Anpassung der Form Kunststoffteils ermöglicht, und dabei kostengünstig, einfach und materialsparend ist.

Diese Aufgabe wird erfindungsgemäß dadurch gelöst, dass das Verfahren die folgenden Schritte umfasst:
a. Bereitstellen einer flüssigen Mischung, umfassend zumindest ein organisches Lösungsmittel, welches in zumindest einer, gegenüber dem Kunststoff im Wesentlichen inerten, Basisflüssigkeit, vorzugsweise Wasser, verdünnt ist;
b. In Kontakt bringen des Kunststoffteils mit der Mischung an zumindest einer Oberfläche;
c. Einwirken lassen der Mischung auf den Kunststoffteil über eine vorgegebene Einwirkzeit;
d. Formen zumindest der Oberfläche des Kunststoffteils durch Aufbringen von Kräften auf die Oberfläche

Sie wird auch dadurch gelöst, dass der Kunststoffteil durch
a. in Kontakt bringen von zumindest einer flüssigen Mischung, umfassend zumindest ein organisches Lösungsmittel, welches in zumindest einer, gegenüber dem Kunststoff im Wesentlichen inerten, Basisflüssigkeit, vorzugsweise Wasser, verdünnt ist, und;
b. anschließendes Einwirken lassen der Mischung auf den Kunststoffteil über eine vorgegebene Einwirkzeit;
formbar gemacht ist.

Mit Kunststoffteil ist ein Element oder Objekt gemeint, das zumindest teilweise aus zumindest einem Kunststoff besteht. Vorzugsweise besteht es aus zumindest einem Kunststoff. Das Kunststoffteil kann dabei ein Element jeglicher Art sein, es kann als Teilstück von Bauten, beispielsweise im Bauwesen, verwendet werden, vorzugsweise als Isolierelement. Es kann auch eine Skulptur, ein Modell, eine Gussform oder ein Teil eines solchen sein. In der Regel werden Kunststoffteile aus einem Kunststoffgranulat hergestellt, beispielsweise gegossen, geschäumt oder extrudiert.

Erfindungsgemäße Kunststoffteile können insbesondere dort Anwendung finden, wo Bauteile definierte Formen aufweisen müssen, die nach dem Grundherstellungsprozess vorgegeben werden. Insbesondere eine individuelle Formgebung kann so erreicht werden. Beispielsweise kann im Bauwesen bei unregelmäßig geformten Fassaden oder anderen Baustrukturen jedes einzelne Bauteil perfekt an die geforderte Form angepasst werden. Auch im Prototypenbau oder im Modellbau kann durch die Erfindung schnell, einfach und materialsparend die Form eines Objekts frei bestimmt werden. Weiters ist eine Anwendung als Gussform, insbesondere als elastische Gussform, möglich.

Durch die Erfindung wird erreicht, dass der Kunststoffteil durch das in Kontakt bringen und Einwirken lassen mit der Mischung zumindest teilweise formbar gemacht wird. Mit formbar ist dabei gemeint, dass der Kunststoff des Kunststoffteils, welcher mit der Mischung in Kontakt kommt, zumindest vorübergehend wesentlich leichter seine Form verändert und vorzugsweise flexibler und/oder elastischer ist als vor dem in Kontakt bringen und Einwirken lassen. So kann auf kostengünstige und materialschonende Weise eine beliebige Form des Kunststoffteils auch nach der Herstellung eingestellt werden. Darüber hinaus kann durch ein solches Verfahren sehr zeiteffizient eine beliebige Form eingestellt werden.

Durch das erfindungsgemäße Verfahren ist es nicht notwendig, Material von der Oberfläche abzutragen, um eine Oberflächenstruktur oder eine Kontur zu erreichen. Insbesondere wenn die Form des Kunststoffstücks als Ganzes geändert werden soll, kann so eine enorme Materialeinsparung erreicht werden.

Mit Formen ist dabei gemeint, dass die dreidimensionale Struktur des Kunststoffteils makroskopisch geändert wird - mit anderen Worten der Kunststoffteil also eine andere Form erhält. Es geht damit nicht um eine bloße Oberflächenveränderung, wie beispielsweise um eine Änderung der Rauheit einer Oberfläche oder das Aufbringen einer Mikrostruktur auf der Oberfläche, sondern um eine tatsächliche Änderung in der Form des Kunststoffteils. Mit dem Formen zumindest der Oberfläche des Kunststoffteils wird also erreicht, dass die Form des Kunststoffteils selbst geändert wird.

Überraschenderweise hat sich herausgestellt, dass insbesondere die thermischen Eigenschaften des Kunststoffes durch das erfindungsgemäße Verfahren nicht wesentlich verschlechtert werden. Dies ist insbesondere dann relevant, wenn das Kunststoffteil beispielsweise als thermischer Isolator verwendet wird, beispielsweise im Bauwesen.

Durch das erfindungsgemäße Verfahren wird nicht nur eine Verformbarkeit erreicht, sondern es wird auch eine neue Materialstruktur zumindest auf der Oberfläche erreicht. Der Kunststoff wird zumindest an der Oberfläche charakteristisch verändert. Insbesondere wenn der Kunststoffteil Polystyrol, insbesondere geschäumtes Polystyrol, umfasst, so wird die Zellenstruktur verzerrt und/oder aufgelöst.

Es kann vorgesehen sein, dass ein Teil der Oberfläche des Kunststoffteils in Kontakt mit der Mischung gebracht wird. In diesem Fall wird nur der entsprechende Teil formbar gemacht. Dies kann insbesondere sinnvoll sein, wenn nur bestimmte Teile der Oberfläche von großen oder dicken Kunststoffteilen, beispielsweise mit einer Dicke über 4 cm, in der Form angepasst werden sollen.

Es ist vorteilhaft, wenn die gesamte Oberfläche in Kontakt mit der Mischung gebracht wird. So kann der Kunststoffteil als ganzes in Form gebracht werden, soweit die Mischung so lange eingewirkt wird, dass sie ausreichend tief eindringen kann.

Vorzugsweise ist vorgesehen, dass das in Kontakt bringen und/oder das Einwirken lassen bei Überdruck erfolgt, vorzugsweise bei einem Druck von über 1,5 bar, vorzugsweise über 3 bar. Dies kann die Wirkung der Mischung beschleunigen und/ oder verbessern.

Vorzugsweise ist vorgesehen, dass das in Kontakt bringen und/oder das Einwirken lassen bei einer Temperatur von über 25°C erfolgt, vorzugsweise bei einer Temperatur von über 30°C, vorzugsweise über 40°C. Dies kann die Wirkung der Mischung beschleunigen und/oder verbessern.

Es kann auch vorteilhaft sein, dass das in Kontakt bringen und/oder das Einwirken lassen bei einer Temperatur von oder unter 25°C erfolgt, vorzugsweise bei einer Temperatur von unter 23°C, vorzugsweise unter 20°C. Dies vermindert das Abdampfen des organischen Lösungsmittels, womit es zu einer Verringerung der Konzentration kommt und eine bessere Verformbarkeit erzielt wird.

Mit in Kontakt bringen ist dabei gemeint, dass die Oberfläche mit der Mischung in Berührung kommt. Dies kann beispielsweise durch Auftragen der Mischung auf die Oberfläche erfolgen. Durch das in Kontakt bringen kann die Mischung und der Kunststoff reagieren.

Vorzugsweise wird zumindest eine Oberflächenschicht des Kunststoffteils mit der Mischung während des Einwirkens durchfeuchtet. Die Oberflächenschicht kann eine Dicke von beispielsweise einigen Millimetern oder mehreren Zentimetern aufweisen.

Mit Einwirken ist gemeint, dass die Mischung auf der Oberfläche verbleibt und mit ihr reagiert, wodurch der Kunststoff des Kunststoffteils formbar wird. Dabei sollte vorzugsweise so viel Mischung vorhanden sein, dass während der gesamten Einwirkzeit die Mischung mit der Oberfläche reagieren kann.

Mit Lösungsmittel sind im Sinne der Erfindung und im allgemeinen Sprachgebrauch flüssige Stoffe gemeint, die üblicherweise Feststoffe lösen können, insbesondere organische Stoffe wie Lacke, Farben oder ähnliches. Dabei ist nicht unbedingt notwendig, dass der Kunststoff, aus dem der Kunststoffteil zumindest teilweise besteht, in dem Lösungsmittel löslich ist. Vorzugsweise umfasst das Lösungsmittel zumindest ein aprotisches Lösungsmittel und/oder zumindest ein protisches Lösungsmittel und/oder besonders vorzugsweise zumindest ein aprotisch-polares und/oder zumindest ein aprotisch-unpolares Lösungsmittel.

Vorzugsweise ist das Lösungsmittel in der Grundflüssigkeit zumindest teilweise löslich. In diesem Sinne ist das Lösungsmittel zumindest teilweise in der Basisflüssigkeit gelöst. Alternativ können diese Stoffe auch als Emulsion vorliegen.

Vorzugsweise ist vorgesehen, dass das Lösungsmittel zumindest ein halogeniertes Lösungsmittel und/oder zumindest ein Keton, Aldehyd, Carbonsäure und/oder Alkohol umfasst, vorzugsweise zumindest ein Keton, Aldehyd, Carbonsäure und/oder einen Alkohol eines niederkettigen Kohlenwasserstoffes, und besonders vorzugsweise Azeton. Mit niederkettigem Kohlenwasserstoff wird ein Kohlenwasserstoff umfassend maximal 10 Kohlenstoffatome, vorzugsweise umfassend maximal 8 Kohlenstoffatome und besonders vorzugsweise umfassend maximal 6 Kohlenstoffatome gemeint. Vorzugsweise weist der niederkettige Kohlenwasserstoff zumindest 3 Kohlenstoffatome auf. Der Kohlenwasserstoff kann dabei gesättigt sein oder zumindest eine Zweifachbindung und/oder zumindest eine Dreifachbindung aufweisen. Das Lösungsmittel kann vorzugsweise Cyclohexanon, Butanon, Dichlormethan und/oder Tetrachlorkohlenstoff umfassen.

Weiters ist vorteilhaft, wenn das Kunststoffteil zumindest teilweise aus einem Kunststoff besteht, das unbeständig gegenüber dem zumindest einen Lösungsmittel ist und/oder expandiert, extrudiert und/oder geschäumt ist und/oder vorzugsweise Polystyrol ist. Mit unbeständig ist gemeint, dass der Kunststoff bei Kontakt mit dem Lösungsmittel in reiner Form nach einer kurzen Zeitspanne seine typischen Eigenschaften verliert, beispielsweise sich zersetzt.

Vorzugsweise ist zumindest ein Teil des Kunststoffteils porös. Mit porös ist dabei gemeint, dass der Kunststoffteil eine Vielzahl an Hohlräumen aufweist, welche miteinander verbunden sein können. Dies ermöglicht ein besseres Eindringen der Mischung und führt zu einer besseren Verarbeitbarkeit.

Es kann vorgesehen sein, dass die Einwirkzeit zumindest 10 Sekunden, vorzugsweise zumindest 20 Sekunden und besonders vorzugsweise zumindest 30 Sekunden beträgt und/oder dass die Einwirkzeit unter 6 Stunden, vorzugsweise unter 1 Stunde, besonders vorzugsweise unter 30 Minuten und ganz besonders vorzugsweise unter 20 Minuten beträgt. Wird die Einwirkzeit zu kurz gewählt, hat die Mischung nicht genug Zeit um tief in den Kunststoffteil einzudringen, wodurch nur eine dünne Schicht verformbar gemacht wird. Weiters kann vorgesehen sein, dass die Einwirkzeit zumindest 1 Minute, vorzugsweise zumindest 3 Minuten und besonders vorzugsweise zumindest 5 Minuten beträgt und/oder dass die Einwirkzeit unter 15 Minuten, vorzugsweise unter 10 Minuten, besonders vorzugsweise unter 7 Minuten und ganz besonders vorzugsweise unter 5 Minuten beträgt.

Weiters ist vorteilhaft, wenn vorgesehen ist, dass die Mischung zumindest 50%, vorzugsweise zumindest 60% und besonders vorzugsweise zumindest 70% Lösungsmittel enthält und/oder dass die Mischung unter 90%, vorzugsweise unter 85% und besonders vorzugsweise unter 80% Lösungsmittel enthält. Eine höhere Konzentration kann zur Schädigung des Kunststoffes führen, während eine zu niedrige Konzentration die Einwirkzeit verlängert. Alternativ oder zusätzlich kann vorgesehen sein, dass die Mischung zumindest 55%, vorzugsweise zumindest 65% oder zumindest 75% und besonders vorzugsweise zumindest 80% Lösungsmittel enthält.

Prozentuelle Gehaltsangaben verweisen in diesem Sinne auf Volumenprozent.

Um ein besonders umfassendes und einfaches in Kontakt bringen zu erreichen, kann vorgesehen sein, dass das in Kontakt bringen umfasst, dass der Kunststoff in die Mischung zumindest teilweise eingetaucht wird. Alternativ oder zusätzlich kann das in Kontakt bringen das Auftragen, Bestreichen und/oder Besprühen der Oberfläche umfassen.

Besonders vorteilhaft ist, wenn das Formen im feuchten Zustand des Kunststoffteils durchgeführt wird. Mit feucht ist gemeint, dass der Kunststoffteil von der Mischung noch feucht ist. Nachdem die Verformbarkeit nach dem Entfernen der Mischung, beispielsweise durch Trocknung, Aus- oder Abblasung, Abtrocknen, oder Abschaben wieder abnehmen kann, ist die rechtzeitige Formung vorteilhaft.

In einer bevorzugten Ausführungsform ist vorgesehen, dass die Mischung nach dem Formen vom Kunststoffteil entfernt wird, vorzugsweise durch Trocknung, und dass vorzugsweise die Kräfte während des Entfernens zumindest teilweise aufrechterhalten werden. Dies bedingt, dass das Aushärten während der Entfernung der Mischung ausgenutzt wird, um eine gewünschte Form des Kunststoffteils beizubehalten. Alternativ oder zusätzlich kann die Rückformung des Kunststoffteils zumindest teilweise durch angrenzende Bauteile wie eine Form verhindert werden. Die Trocknung kann passiv erfolgen, indem gewartet wird, bis die Mischung verdunstet oder verdampft, oder sie kann aktiv erfolgen, beispielsweise durch Aussetzen des Kunststoffteils in einem Luftstrom, der vorzugsweise erwärmt ist.

Es kann vorgesehen sein, dass das Formen umfasst, dass zumindest eine Form auf die Oberfläche des Kunststoffteils angelegt wird und vorzugsweise, dass die Form während des Entfernens der Mischung zumindest teilweise angelegt bleibt. So kann eine definierte dreidimensionale Struktur durch die Form vorgegeben werden, die zumindest die Oberfläche oder zumindest ein Teil des Kunststoffteils einnimmt.

Alternativ oder zusätzlich kann das Formen umfassen, dass die Form durch zumindest ein Werkzeug wie einer Zange oder händisch angepasst wird.

Besonders vorteilhaft ist, wenn das Formen umfasst, dass zumindest ein Werkstoff, vorzugsweise ein Gusswerkstoff, besonders vorzugsweise Beton, auf die Oberfläche aufgetragen wird. So kann der Kunststoffteil als flexible Gussform verwendet werden, insbesondere wenn der Kunststoffteil noch feucht ist. Nach Aushärten des Gusswerkstoffes kann das so erhaltene Gussprodukt aus dem Kunststoffteil herausgenommen werden. Vorzugsweise erfolgt dieser Schritt direkt nach dem Einwirken.

Besonders vorteilhaft ist, wenn das Formen umfasst, dass Gas mit Druck, vorzugsweise Druckluft, auf das Kunststoffteil wirkt, vorzugsweise auf der zumindest einen Oberfläche. Vorzugsweise wirkt das Gas mit Druck dabei auf einer Seite des Kunststoffteils, wobei auf einer anderen Seite, vorzugsweise auf der gegenüberliegenden Seite, ein niedrigerer Druck, beispielsweise Normaldruck, herrscht, wodurch eine Verformung in diese andere Seite bedingt wird. Durch den Druckaufbau mittels Gas wird ein Oberflächenkontakt mit Formen vermieden.

Es kann auch vorgesehen sein, dass Gas mit Druck auf allen Seiten des Kunststoffteils wirkt, was dann insbesondere zu Dickenverringerungen eingesetzt werden kann.

Es kann vorgesehen sein, dass der Druck des Gases während des Formens in einer Steigerungsphase zu einem Maximaldruck gesteigert wird. Dies ist besonders vorteilhaft, da so eine Beschädigung des Kunststoffteils verhindert werden kann. Vorzugsweise ist vorgesehen, dass diese Steigerungsphase vorzugsweise maximal 2 Minuten, vorzugsweise maximal 1 Minute dauert. Wenn die Steigerungsphase unter den angegebenen Zeitlängen bleibt, so kann verhindert werden, dass es durch die Evaporation des Lösungsmittels zu einer vorzeitigen Verminderung der Formbarkeit kommt.

Weiters kann vorgesehen sein, dass das Kunststoffteil in dem Bereich, der verformt wird und in dem der Druck auf das Kunststoffteil wirkt, eine maximale Dicke von maximal 5 mm, vorzugsweise maximal 4 mm und besonders vorzugsweise maximal 3,5 mm aufweist und/oder vorzugsweise eine minimale Dicke von minimal 0,5 mm, besonders vorzugsweise minimal 1 mm aufweist. Durch die nicht zu hohe Dicke wird erreicht, dass der Druck nicht zu hoch sein muss, um eine Verformung zu erreichen. Würde der Druck zu hoch angelegt werden, könnte es zu einem Zerreißen kommen. Wenn die Dicke zu gering ist, so kann der Kunststoffteil auch geringeren Drücken nicht Stand halten und läuft Gefahr der Beschädigung. Dabei kann vorgesehen sein, dass es Bereiche des Kunststoffteils gibt, die dem Gas mit Druck ausgesetzt sind und unter Umständen auch behandelte Oberflächen aufweisen, aber nicht oder nicht wesentlich verformt werden sollen, beispielsweise Kanäle für das Gas zu einer zu formenden Kammer. Dies ist unerheblich und es kann sogar sinnvoll sein, die Dicken in diesen Bereichen größer auszuführen.

Wenn das Formen umfasst, dass Gas mit Druck, vorzugsweise Druckluft, auf das Kunststoffteil wirkt, so ist besonders vorteilhaft, wenn ein Maximaldruck des Gases maximal 1 bar, vorzugsweise maximal 0,5 bar, über dem Umgebungsdruck beträgt. Falls also unter Normaldruck von etwa 1 bar gearbeitet wird, so ist vorteilhaft, wenn ein Maximaldruck des Gases maximal 2 bar, vorzugsweise maximal 1,5 bar beträgt. Es hat sich herausgestellt, dass dieser Druck eine besonders effiziente und sichere Formung ermöglicht, ohne dass es zu einer Beschädigung des Kunststoffteils kommt.

Es kann vorgesehen sein, dass für zumindest zwei Teile des Kunststoffteils die Schritte des
b. in Kontakt bringens des Kunststoffteils mit der Mischung an zumindest einer Oberfläche, und das
c. Einwirken lassen der Mischung auf den Kunststoffteil über eine vorgegebene Einwirkzeit
getrennt voneinander durchgeführt werden und diese Teile vor dem Schritt des Formens zusammengefügt werden. Mit getrennt voneinander durchgeführt ist dabei gemeint, dass die Teile an jenen Kontaktflächen nicht zusammengefügt sind, die im Zuge des Zusammenfügens miteinander verbunden werden. Dies ermöglicht ein besonders gutes Einwirken an Stellen des Kunststoffteils, die im zusammengebauten Zustand nicht oder nur schlecht zugänglich sind.

Das Zusammenfügen kann beispielsweise das Verkleben mit einem Klebstoff oder das Verbinden der Teile mit anderen Verbindungstechniken, beispielsweise Nieten, Kunststoffschweißen oder ähnliches umfassen.

Ein solches Vorgehen ist besonders vorteilhaft, wenn das Formen die Verwendung von Gas mit Druck umfasst. Denn so können beispielsweise innere Hohlräume einfach geformt werden, indem getrennte Teile die erfindungsgemäßen Verfahrensschritte b. und c. durchführen und dann derart zusammengefügt werden, dass behandelte Oberflächen im Inneren liegen, welche dann mit Gas mit Druck beaufschlagt werden, um so den Hohlraum zu formen.

Vorzugsweise werden im Zuge der Zusammenfügung Kontaktoberflächen der Teile des Kunststoffteils zusammengebracht, wobei zumindest eine Kontaktoberfläche zumindest eines Teils zumindest teilweise die zumindest eine Oberfläche ist. Dies ermöglicht, dass die Veränderung der zumindest einen Oberfläche durch Schritte b. und c. auch eine Auswirkung auf die Zusammenfügung hat und kann unter Umständen die Verbindung der Teile verbessern oder ermöglichen. Dies kann noch verstärkt werden, wenn die Kontaktflächen beider Teile zumindest teilweise die zumindest eine Oberfläche des jeweiligen Teils ist.

In diesem Sinne besonders vorteilhaft ist, wenn der Werkstoff den Kunststoffteil zumindest teilweise verformt. Dies kann durch die Gewichtskraft des Gusswerkstoffs erreicht werden, und/oder es kann Druck auf den Gusswerkstoff ausgeübt werden.

Weiters kann vorgesehen sein, dass das Kunststoffteil vorzugsweise eine maximale Dicke von 4 cm, besonders vorzugsweise maximal 3 cm und ganz besonders vorzugsweise maximal 2 cm aufweist. Dies ist insbesondere deswegen vorteilhaft, weil so einfach im Wesentlichen der gesamte Kunststoffteil formbar gemacht werden kann. Dies erleichtert die Verformung.

Weiters kann vorgesehen sein, dass Kunststoffmaterial von der Oberfläche des Kunststoffteils, die mit der Mischung in Kontakt gebracht wird, vor dem in Kontakt bringen teilweise entfernt wird, vorzugsweise abrasiv, beispielsweise durch Fräsen, Heißdrahtschweißen, Laser-schneiden oder Schnitzen. So kann die Verformbarkeit der einzelnen Bereiche der Oberfläche eingestellt werden und unterschiedlich verändert werden. Insbesondere wenn der Kunststoffteil als Gussform, wie oben beschrieben, verwendet wird, kann so die endgültige Form des Gussprodukts eingestellt oder verändert werden.

In diesem Sinne kann auch vorgesehen sein, dass durch das Entfernen von Kunststoffmaterial die Dicke des Kunststoffteils verändert wird. So können verschiedene Dicken in verschiedenen Bereichen des Kunststoffteils erreicht werden. Dies ist insbesondere vorteilhaft, da so durch die unterschiedliche Dicke die Verformbarkeit in Bereichen verändert werden kann. So kann die Elastizität und/oder das Elastizitätsmodul eines Bereichs durch die veränderte Dicke verändert werden, was insbesondere bei der Verwendung als Gussform vorteilhaft ist. Dieser Effekt kann natürlich auch vorteilhaft sein, wenn Kunststoffmaterial von der Oberfläche des Kunststoffteils, die mit der Mischung in Kontakt gebracht wird, vor dem in Kontakt bringen teilweise entfernt wird.

Um die Wirkung der Mischung in einem bestimmten Bereich zu verhindern oder zu vermindern, kann vorgesehen sein, dass zumindest ein Teil der Oberfläche des Kunststoffteils, die mit der Mischung in Kontakt gebracht wird, vor dem in Kontakt bringen mit einem Schutzmaterial abgedeckt wird. Das Schutzmaterial kann dabei beispielsweise die Basisflüssigkeit, vorzugsweise Wasser sein oder eine andere Substanz, die vorzugsweise nicht durchlässig für das Lösungsmittel ist. Beispielsweise kann das Schutzmaterial Paraffin oder Vaseline sein, oder auch ein Klebestreifen. Dies ermöglicht eine spezifische Einstellung, welche Teile des Kunststoffteils verformbar gemacht werden und/oder welche Teile zu einem geringeren Maß verformbar gemacht werden.

Weiters ist vorteilhaft, wenn zumindest ein Barrierematerial, vorzugsweise umfassend zumindest ein Öl, auf zumindest einen Teil der Oberfläche des Kunststoffteils aufgetragen wird, bevor er geformt wird. Dies ermöglicht das leichtere Ablösen des Kunststoffteils von einem Objekt wie dem Gussprodukt oder einer Form. Das Barrierematerial kann beispielsweise ein Paraffin, Pflanzenöl, Maschinenöl oder anderes lipophiles Material umfassen.

In weiterer Folge wird die Erfindung anhand nicht einschränkender Ausführungsformen näher erläutert. Es zeigen:
- Fig. 1: ein erfindungsgemäßes Verfahren in einer ersten Ausführungsform in einem Blockdiagramm;
- Fig. 2: ein erfindungsgemäßes Kunststoffteil in einer ersten Ausführungsform während des Verfahrens aus Figur 1 während des Schritts des Formens;
- Fig. 3: ein erfindungsgemäßes Kunststoffteil in einer zweiten Ausführungsform in einer schematischen Draufsicht, nachdem es formbar gemacht ist;
- Fig. 4: das Kunststoffteil aus Fig. 3 während des Formens in einer Schrägansicht.

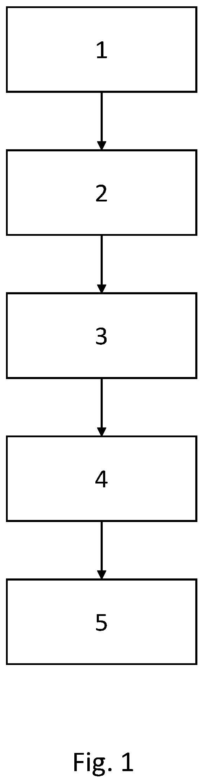

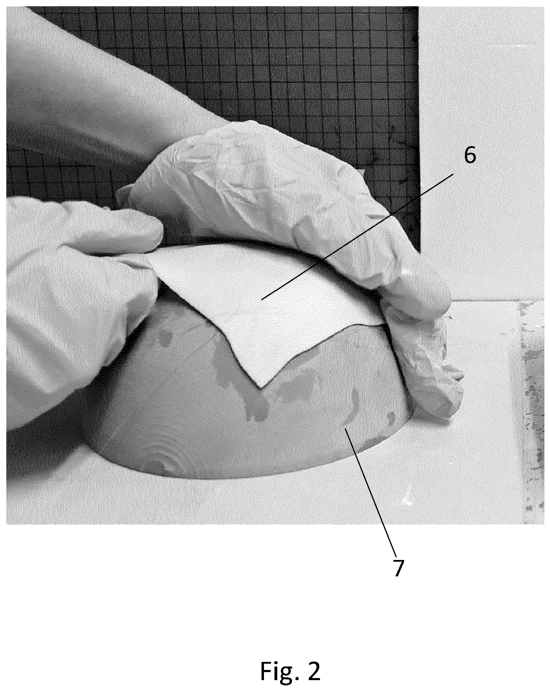

In einer ersten Ausführungsform des erfindungsgemäßen Verfahrens in Fig. 1 wird in einem Schritt 1 zuerst die Mischung bereitgestellt, indem Azeton und Wasser in einem Verhältnis von 4:1 (Azeton zu Wasser) gemischt wird und so eine Mischung in Form einer Lösung erhalten wird. In Schritt 2 wird daraufhin ein Kunststoffteil 6 in die Mischung eingetaucht und damit seine Oberfläche in Kontakt mit der Mischung gebracht. Das Kunststoffteil 6 ist in dieser Ausführungsform rechteckig, aus Polystyrol und vor dem in Kontakt bringen flach. In Schritt 3 wird das Kunststoffteil in der Mischung für 10 Minuten belassen, welche somit einwirken kann. Danach wird das Kunststoffteil 6 herausgenommen. In Schritt 4 wird das Kunststoffteil 6 geformt, indem es händisch an eine Form 7 angedrückt wird. In Figur 2 ist dargestellt, wie das vormals flache Kunststoffteil 1 nun formbar ist und sich an die kugelförmige Außenkontur der Form 7 anpasst. In Schritt 5 wird die Mischung vom Kunststoffteil 7 entfernt, indem das Kunststoffteil 6 bis zu einem gewissen Grad trocknen gelassen wird. Danach wird das Kunststoffteil 6 von der Form 7 entfernt und behält seine durch die Form 7 definierte Kontur, da es nach dem Entfernen der Mischung seine Formbarkeit zumindest großteils verliert.

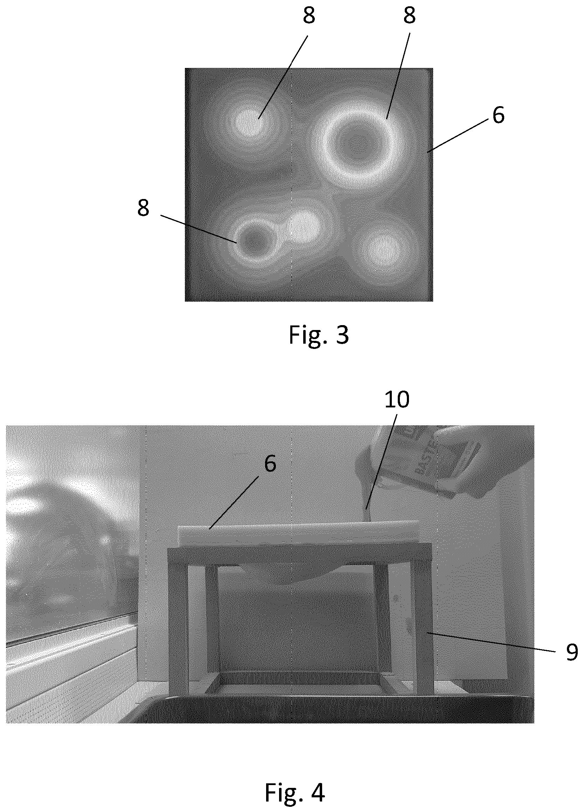

In Figur 3 ist eine alternative Ausführungsform eines erfindungsgemäßen Kunststoffteils 6 gezeigt, das ebenso eine rechteckige Form mit einer gleichmäßigen Dicke von 3 cm aufweist. Dabei wurde vor dem in Kontakt bringen mit der Mischung die Oberfläche durch Fräsen teilweise abgetragen, die Linien 8 stellen schematisch dar, wo in welchem Maß das Kunststoffmaterial abgetragen wurde.

In Figur 4 ist das erfindungsgemäße Kunststoffteil 6 aus Fig. 3 in einem Rahmen 9 während des Schritts des Formens dargestellt. Es wird dazu Gusswerkstoff 10 auf eine Oberfläche des Kunststoffteils 6 aufgetragen, vorzugsweise jene, die konturiert wurde. Durch das Gewicht des Gusswerkstoffes 10 wird der Kunststoffteil 6 geformt, wobei die Stellen, die stärker abgetragen wurden, stärker verformt werden. Nach dem Aushärten wird so ein Gussprodukt definierter Form erhalten.

## Patentansprüche

1. Verfahren zur Bearbeitung eines Kunststoffteils (6), wobei das Verfahren die folgenden Schritte umfasst:
a. Bereitstellen einer flüssigen Mischung, umfassend zumindest ein organisches Lösungsmittel, welches in zumindest einer, gegenüber dem Kunststoff im Wesentlichen inerten, Basisflüssigkeit, vorzugsweise Wasser, verdünnt ist;
b. In Kontakt bringen des Kunststoffteils (6) mit der Mischung an zumindest einer Oberfläche;
c. Einwirken lassen der Mischung auf den Kunststoffteil (6) über eine vorgegebene Einwirkzeit;
d. Formen zumindest der Oberfläche des Kunststoffteils (6) durch Aufbringen von Kräften auf die Oberfläche.

2. Verfahren nach Anspruch 1, **dadurch gekennzeichnet, dass** das Lösungsmittel zumindest ein halogeniertes Lösungsmittel und/oder zumindest ein Keton, Aldehyd, Carbonsäure und/oder Alkohol umfasst, vorzugsweise zumindest ein Keton, Aldehyd, Carbonsäure und/oder einen Alkohol eines niederkettigen Kohlenwasserstoffes, und besonders vorzugsweise Azeton.

3. Verfahren nach Anspruch 1 oder 2, **dadurch gekennzeichnet, dass** das Kunststoffteil (6) zumindest teilweise aus einem Kunststoff besteht, das unbeständig gegenüber dem zumindest einen Lösungsmittel ist und/oder expandiert und/oder geschäumt ist und/oder vorzugsweise Polystyrol ist.

4. Verfahren nach einem der Ansprüche 1 bis 3, **dadurch gekennzeichnet, dass** die Einwirkzeit zumindest 10 Sekunden, vorzugsweise zumindest 20 Sekunden und besonders vorzugsweise zumindest 30 Sekunden beträgt und/ oder dass die Einwirkzeit unter 6 Stunden, vorzugsweise unter 1 Stunde, besonders vorzugsweise unter 30 Minuten und ganz besonders vorzugsweise unter 20 Minuten beträgt.

5. Verfahren nach einem der Ansprüche 1 bis 4, **dadurch gekennzeichnet, dass** die Mischung zumindest 50%, vorzugsweise zumindest 60% und besonders vorzugsweise zumindest 70% Lösungsmittel enthält und/oder dass die Mischung unter 90%, vorzugsweise unter 85% und besonders vorzugsweise unter 80% Lösungsmittel enthält.

6. Verfahren nach einem der Ansprüche 1 bis 5, **dadurch gekennzeichnet, dass** das Formen im feuchten Zustand des Kunststoffteils (6) durchgeführt wird.

7. Verfahren nach einem der Ansprüche 1 bis 6, **dadurch gekennzeichnet, dass** die Mischung nach dem Formen vom Kunststoffteil (6) entfernt wird, vorzugsweise durch Trocknung, und dass vorzugsweise die Kräfte während des Entfernens zumindest teilweise aufrechterhalten werden.

8. Verfahren nach einem der Ansprüche 1 bis 7, **dadurch gekennzeichnet, dass** das Formen umfasst, dass zumindest eine Form (7) auf die Oberfläche des Kunststoffteils (6) angelegt wird und vorzugsweise, dass die Form (7) während des Entfernens der Mischung zumindest teilweise angelegt bleibt, und/oder dass das Formen umfasst, dass zumindest ein Werkstoff, vorzugsweise ein Gusswerkstoff (10), besonders vorzugsweise Beton, auf die Oberfläche aufgetragen wird.

9. Verfahren nach einem der Ansprüche 1 bis 8, **dadurch gekennzeichnet, dass** das Formen umfasst, dass Gas mit Druck, vorzugsweise Druckluft, auf das Kunststoffteil (6) wirkt, vorzugsweise auf der zumindest einen Oberfläche.

10. Verfahren nach Anspruch 9, **dadurch gekennzeichnet, dass** der Druck des Gases während des Formens in einer Steigerungsphase zu einem Maximaldruck gesteigert wird, und dass diese Steigerungsphase vorzugsweise maximal 2 Minuten, vorzugsweise maximal 1 Minute dauert.

11. Verfahren nach einem der Ansprüche 9 oder 10, **dadurch gekennzeichnet, dass** das Kunststoffteil (6) in dem Bereich, der verformt wird und in dem der Druck auf das Kunststoffteil (6) wirkt, eine maximale Dicke von maximal 5 mm, vorzugsweise maximal 4 mm und besonders vorzugsweise maximal 3,5 mm aufweist und/oder vorzugsweise eine minimale Dicke von minimal 0,5 mm, besonders vorzugsweise minimal 1 mm aufweist.

12. Verfahren nach einem der Ansprüche 1 bis 11, **dadurch gekennzeichnet, dass** das Kunststoffteil (6) vorzugsweise eine maximale Dicke von 4 cm, besonders vorzugsweise maximal 3 cm und ganz besonders vorzugsweise maximal 2 cm aufweist.

13. Verfahren nach einem der Ansprüche 1 bis 12, **dadurch gekennzeichnet, dass** zumindest ein Barrierematerial, vorzugsweise umfassend zumindest ein Öl, auf zumindest einen Teil der Oberfläche des Kunststoffteils (6) aufgetragen wird, bevor er geformt wird.

14. Kunststoffteil (6), zumindest teilweise bestehend aus zumindest einem Kunststoff, wobei der Kunststoffteil (6) durch
a. in Kontakt bringen von zumindest einer flüssigen Mischung, umfassend zumindest ein organisches Lösungsmittel, welches in zumindest einer, gegenüber dem Kunststoff im Wesentlichen inerten, Basisflüssigkeit, vorzugsweise Wasser, verdünnt ist, und;
b. anschließendes Einwirken lassen der Mischung auf den Kunststoffteil (6) über eine vorgegebene Einwirkzeit;
formbar gemacht ist.

15. Kunststoffteil (6) nach Anspruch 14, **dadurch gekennzeichnet, dass** es durch ein Verfahren nach einem der Ansprüche 1 bis 15 hergestellt ist.
